# EUROPEAN PATENT SPECIFICATION

(11) **EP 1 726 777 B1**
(45) Date of publication and mention of the grant of the patent: **11.03.2009**
(21) Application number: 06290845.4
(22) Date of filing: 24.05.2006
(51) Int. Cl.: E21F 5/02, B05B 7/00

(54) **System and method for suppressing dust and odors**
Vorrichtung und Verfahren zur Bekämpfung von Staub und Gerüchen
Méthode et appareil pour la suppression de poussière et des odeurs

(30) Priority: 25.05.2005 US 684621 P
(43) Date of publication of application: 29.11.2006
(73) Proprietor: Dust Control Technology, Peoria IL 61615 (US)
(72) Inventor: Peterson, Edwin, Brimfield IL 61517 (US)
(74) Representative: Loisel, Bertrand

(56) References cited:
- EP-A- 0 908 215
- CA-A1- 2 245 362
- DE-A1- 3 441 386
- DE-A1- 19 729 260
- US-A- 5 211 336

## Description

This invention relates in general to a system and method for suppressing dust and/or odors, and more particularly, to a system and method for generating and distributing a fine mist having different sized particles to suppress dust and/or odors.

### BACKGROUND OF THE INVENTION

During a variety of work, including but not limited to, construction or demolition work or at coal powered power plants, steel mills, foundries, and other basic industries, a significant amount of dust and other small particles and contaminates is generated and introduced into the surrounding air. Furthermore, when using large machinery such as a backhoe or other excavating equipment, a significant amount of dust and debris is created at or around the point of impact with the ground. In order to provide a safe working environment as well as inhibit any damage done to the equipment or structures, it is important to try and limit the amount of dust. One of the known ways to suppress the creation of dust is to have an individual use a water hose to spray particular areas of the construction site. While the use of a hose may work to a certain extent to limit the amount of dust, it has several drawbacks including that it (1) requires an individual to operate the hose at all times; (2) does not provide an effective coverage area; (3) oversaturates areas of use; and (4) creates water droplets that are too large (between 3000 and 300 micron) to effectively control dust.

Furthermore, where there is dust or other contaminants in the air, it is also common for there to be odors. It has been known that misters for controlling dust also may facilitate the suppression of odors. However, use of known dust controlling misters does not effectively suppress odors and dust because the size of water particles that are optimal for controlling dust are not the optimal size to suppress odors. Accordingly, known misters for controlling dust do not effectively suppress odors.

Therefore, there is a need to produce a device that provides an effective, portable and easy way to suppress dust. There is also a need to produce a device that provides for effective control or suppression of both dust and odors by matching the size of the water particles generated to what is desired to be controlled (i.e., dust and/or odor).

Kaidonis U.S. Patent No. 5,211,336 is directed to a method of using a plurality of barrels to dispense water upward to protect against fire.

EP 0 908 215 is directed to a mister provided with nozzles which can be individually adjusted.

### SUMMARY OF THE INVENTION

The present invention is an improvement, over the prior devices for suppressing dust in that the way that the device distributes a mist over a large area is unique and comprises an improvement over the prior art. Furthermore, the present invention is an improvement over the prior devices for suppressing odors and dust in that the way that the device distributes mists having different optimal Particle sizes for each purpose is unique and an improvement over the prior art. In particular the dust suppression device of the present invention includes a fan-propelled mister that draws air into a fan and propels the air through a discharge tube to create a high velocity airflow. A misting ring having a plurality of nozzles is located at the distal end of the discharge tube to create a mist of small water particles that may be distributed over a large area by the high velocity airflow. In order to increase the water pressure of the water flowing into the misting ring, the water preferably passes through a pressure booster.

The fan propelled mister preferably may be rotated in a vertical plane to permit the mist to be directed to elevated areas. The fan propelled mister may also oscillate within a defined range to permit the mist to be distributed over a wider area. In order to facilitate movement of the fan propelled mister, the base of the fan propelled mister preferably includes a Plurality of wheels and a tow or push bar. A pair of oscillating fan propelled misters may also be used to effectively cover a large area.

The fan propelled mister may also include separate nozzles for dispensing a mist of the optimal sized particles for suppressing odor. In particular, the fan propelled mister may include a first set of nozzles for generating a mist having fluid (e.g., water) particles of a first size for controlling or suppressing dust, and a second set of nozzles for generating a mist having fluid particles of a second size for suppressing odor. The second set of nozzles may also be connected to a separate tank or reservoir to dispense a deodorizer.

It is further appreciated that the device may also include one or more high pressure hoses, each of which may be independently directed by the user to control dust and other contaminants around the point of impact of large heavy-duty machines or other excavating equipment to saturate a particular area or zone. In one embodiment, a high pressure hose is attached by a mounting to the discharge tube. It is appreciated that the high pressure hose pass though or near the center of vertical rotation of the discharge tube to facilitate vertical rotation. A guard may be attached to or about the discharge tube to prevent the high pressure hose from rubbing against the discharge tube during use.

An alternate embodiment of the present invention comprises a pedestal base having a nozzle on top that is connected to a power washer for generating increased pressure for distributing the mist over a large distance. The pedestal preferably includes an inner cavity to permit water or other liquids to be inserted to provide for a stable base, and removed to facilitate movement of the device.

In order to cleanse the air passing through the fan for use in the present invention, a filter is used to filter out contaminants.

It is therefore an object of the present invention to provide a new and improved system and method for suppressing odor and/or dust that lowers the water usage and cost.

Another object of the present invention is to provide a new and improved system and method for suppressing odor and/or dust that provides coverage to a large area without oversaturating the area.

It is yet another object of the present invention to produce a new and improved system and method for suppressing both odor and dust.

Other objects, features and advantages of the invention will be apparent from the following detailed disclosure, taken in conjunction with the accompanying sheets of drawings, wherein like reference numerals refer to like parts.

### BRIEF DESCRIPTION OF THE DRAWINGS

Fig. 1 is a perspective view of one embodiment of the dust suppressor of the present invention in operation.
Fig. 2 is a partial perspective view showing a plurality of nozzles creating a mist.
Fig. 3 is a rear elevation view of the dust suppressor shown in Fig. 1.
Fig. 4 is a perspective view of an alternative embodiment of the dust suppressor of the present invention.
Fig. 5 is a partial perspective view of the discharge tubes and nozzles of another embodiment of the dust suppressor of the present invention.
Fig. 6 is a perspective view of the dust suppressor shown in Fig. 5.
Fig. 7 is a schematic drawing of an embodiment of the dust suppressor illustrating a mount for a water hose.
Fig. 8 is a schematic drawing of an embodiment of the dust suppressor having a filter.

### DETAILED DESCRIPTION OF THE INVENTION

While this invention is susceptible of embodiment in many different forms, there is shown in the drawings and will herein be described in detail several specific embodiments, with the understanding that the present disclosure is to be considered merely an exemplification of the principles of the invention and the application is limited only to the appended claims.

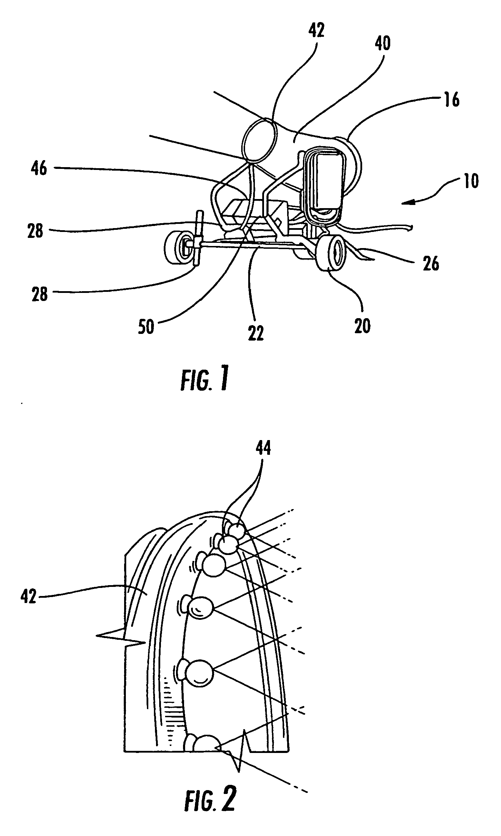

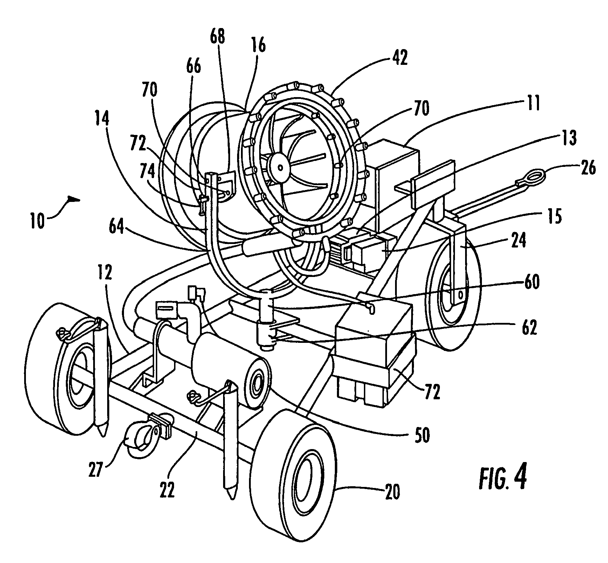

Referring now to the drawings, and particularly to FIGS. 1 through 3, there is shown a first embodiment of the present invention. The dust suppression device of the present invention, generally designated by the number 10, is shown as having a base 12 and a frame 14 for supporting a fan propelled mister 16. Referring to Fig. 4, the device may also comprise a control panel 11 to allow for the localized operation and control of the device, a compressor 13, and a dosing pump 15.

The base 12 preferably includes a plurality of wheels 20 that are rotably connected to the base 12 through an axle 22 located at or proximate to the front end of the base 12 and an arm 24 located at or proximate to the rear of the base 12. While the base is shown as being triangular in shape, it is appreciated that it may be a variety of different shapes and not depart from the scope of the present invention. In order to assist in moving the dust suppression device 10, a tow or push bar 26 may extend from the base or frame, or a coupling member 27 may extend outwardly from the base 16 for attaching to a corresponding coupling member. The tow or push bar 26 may also be designed to contact the ground to provide additional support for the device 10 during operation. Additionally, the device preferably includes posts 28 having platforms 29 that are moveably attached to the base to permit the platforms to be slid into and out of contact with the ground to inhibit or facilitate movement of the device, respectively. While the first embodiment of the device is preferably portable to facilitate transportation of the device to different locales, it is appreciated that it may stationary or less mobile and not depart from the scope of the present invention. It is appreciated that the base may comprise any type of structure in which the mister is attached to including, but not limited to, a crane or other machinery or a post. The base may also include the flange structure and not depart from the scope of the present invention.

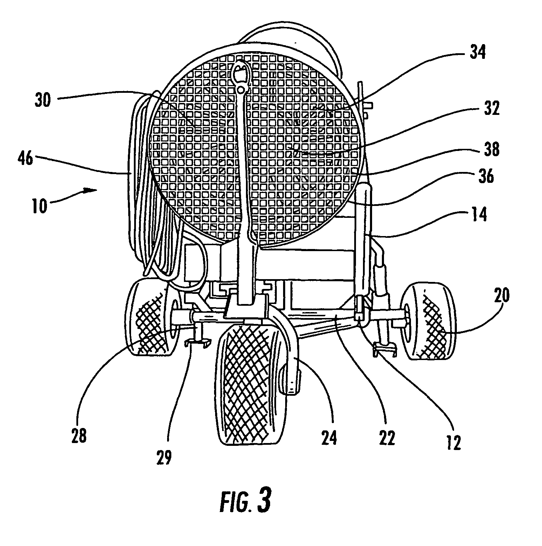

Referring to Figs. 1 and 3, the fan propelled mister 16 includes a fan 30 having a hub 32 and a plurality of blades 34 within a housing 36. A grate or mesh 38 preferably covers the back of the housing 36 and the fan 30 to permit air, but not large foreign objects, to be drawn into the fan during use. The housing 36 of the fan preferably includes a discharge tube 40 to permit the generation of a high-velocity airflow through the fan propelled mister 16.

A fan motor (not shown) may be mounted in the housing of the hub 32 or elsewhere for rotating the plurality of blades. Power may be supplied to the fan motor in any of the known ways including, but not limited to: through batteries; connecting an electrical cord to an electrical outlet or other power source; or, in large applications, through an engine. A switch (not shown) is preferably electrically connected to the fan motor in a known way to permit the fan propelled mister to be selectively operated. It is appreciated that when a battery is used, a battery charger may also be used to prevent the battery from running down. Alternatively, operating the fan at idle speed may also assist in keeping the battery charged. An example of a suitable fan is a 30,000 CFM 25 HP fan. While a fan-propelled mister is preferred, it is appreciated that the mister may work with any of the known means for creating a high-velocity airflow, such as, but not limited to, an air compressor.

A misting ring 42 having a plurality of nozzles is preferably attached or connected to the end of the discharge tube 40 in a known way. The nozzles may be any of the known types to permit a fine mist to be created and different nozzles may be used to generate different sized fluid (e.g., water) particles. Nozzles providing different sized fluid particles can be alternated or otherwise located about a single ring or on concentric rings, each of which may carry different sized nozzles. It is appreciated that the nozzles may be made of, among other things, brass, stainless steel or nylon. In order to control dust, the nozzles in one embodiment generate water particles wherein the majority of the water particles fall within the range of 50 to 200 microns. It is also appreciated that the device may include one nozzle that has multiple outlets for creating mists and not depart from the scope of the present invention.

A fluid, such as but not limited to water, is preferably supplied to the misting ring 42 through the use of hose or tube 46 that is connected to a fluid source such as a water tank or outlet (not shown) for distributing small fluid particles in the form of a fine mist into the airflow. In order to increase the fluid pressure, in one embodiment of the present invention, water from the hose or tube 46 is preferably delivered to a booster pump 50 to boost the water pressure. In one such embodiment, the water pressure is increased to 150psi. If potable water is not used, it is appreciated that filters may be utilized to filter the water prior to its distribution. A valve (not shown) may be connected to the water supply tube or hose or booster pump for controlling the flow of water to the misting ring. While a misting ring is shown and disclosed about the distal end of the discharge tube, it is appreciated that other structures for housing nozzles may be used and not depart from the scope of the present invention.

While the embodiments shown and disclosed herein use a water source to generate water particles, it is appreciated that the device may connect to one or more other fluid sources, in addition to or in lieu of the water source, depending upon the desired use of the device to suppress dust and/or odor. Additionally, while the embodiment shown and disclosed discusses suppressing dust and/or odor, it is appreciated that the device may be used to dispense other various known fluids over designated areas (e.g., microbes over a compost pile) to control or address a variety of other contaminants or particles.

In order to cover a larger area or an elevated area, the dust suppression device 10 of the present invention preferably permits the fan propelled mister 16 to be angled upwards. Referring again to Fig. 4, one embodiment of the frame 14 is shown and disclosed for permitting the rotational and angular movement of the misting discharge tube 40. The frame 14 includes a cylindrical tube base member 60 that fits within a corresponding sleeve 61 attached to the base 12. The tubular base member 60 is preferably sized to permit the rotational movement of the discharge tube 40 relative to the base 12, while maintaining the height of the discharge tube. In order to assist in preventing the vertical movement of the tubular base member, the tubular base member may include a flange member (not shown) that extends around the tubular base member to contact the top edge of the sleeve, and/or other fastening devices, such as, but not limited to, cotter pins, clips and the like.

Extending from the top of the tubular base member 60 is a pair of arms 64 forming a U-shaped bracket. A pair of pins 66 extend through the upper ends of the arms and engage corresponding mounting plates 68 attached to the side of the discharge tube 40. The pins 66 are sized so that they may rotate within the corresponding holes on the arms. In order to maintain the fan propelled mister 16 at the desired angle, a pair of second pins 72 may extend through holes on the arms 64 and into ones of a plurality of spaced-apart holes 70 on the mounting plates. In order to assist in the insertion and removal of the second pins 72, a pin 74 having enlarged ends extends through a hole on the end of the second pins72. To withdraw the second pins, the bottom end of the pin 74 may be pushed upward to permit fingers to extend behind both ends of the pin 74 and apply a longitudinal force along the length of the pin 72 to remove the pin from its corresponding hole 74. In one embodiment, the fan propelled mister may be angled up to an angle of about 70 degrees from horizontal. Additionally, it is appreciated that the fan may be permitted to oscillate to spread the mist over a larger area. In one embodiment, the fan is permitted to oscillate through about 120 degrees. Furthermore, it is appreciated that a pair of devices or oscillating fan propelled misters may be arranged so that their respective mist outputs cross.

In another alternate embodiment, the dust suppression device, as shown in Fig. 4, may comprise a first set of nozzles 42 for generating a mist having water particles of a first size to contact and remove dust particles from the air, and a second set of nozzles 70 for generating a mist having water particles of a second size for removing or suppressing odor from the air. Nozzles providing different sized water particles can be alternated or otherwise located about a single ring or on concentric rings, each of which may carry different sized nozzles, can be provided. It is also appreciated that the nozzles may be located or used in connection with separate devices that may be used simultaneously. It is further appreciated that the nozzles for the odor suppression may be connected to the water source 72, or to a separate source for dispensing a deodorizer or other odor-suppressing fluid into the air. In a preferred embodiment, the nozzles to control dust generate water particles that mostly fall within in the range of 50 to 200 microns, and the nozzles to control odor generate water particles that mostly fall within the range of 15 micron or less. As indicated above, it is appreciated that the system may generate water particles outside of the range, but that the majority of the water particles in the preferred embodiment would fall within the aforementioned ranges. While a fan-propelled mister is preferred, it is appreciated that the mister may work with any of the known means for creating a high-velocity airflow such as, but not limited to, an air compressor.

In operation, rather than utilizing both sets of nozzles simultaneously, the device may perform the misting operation in multiple steps. For example, in one embodiment, the device may first create a mist having 50 micron or smaller particles for controlling or suppressing odor. The device may then utilize the second set of nozzles for creating a second mist of particles for controlling or suppressing dust or other contaminants.

In order to further control dust, odor and/or other contaminants, it is appreciated that a known sealant may be added to the water or other fluid to enhance the sealing characteristics of the fluid to maintain the captured odor or dust particles on the ground.

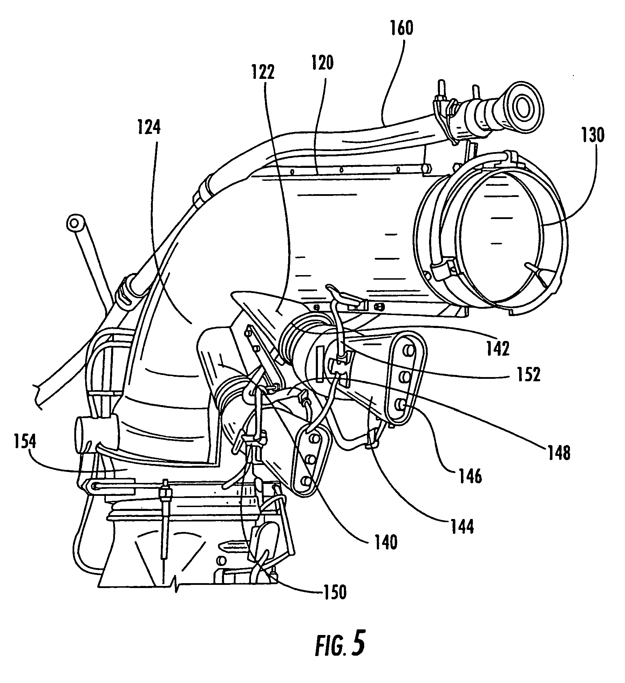

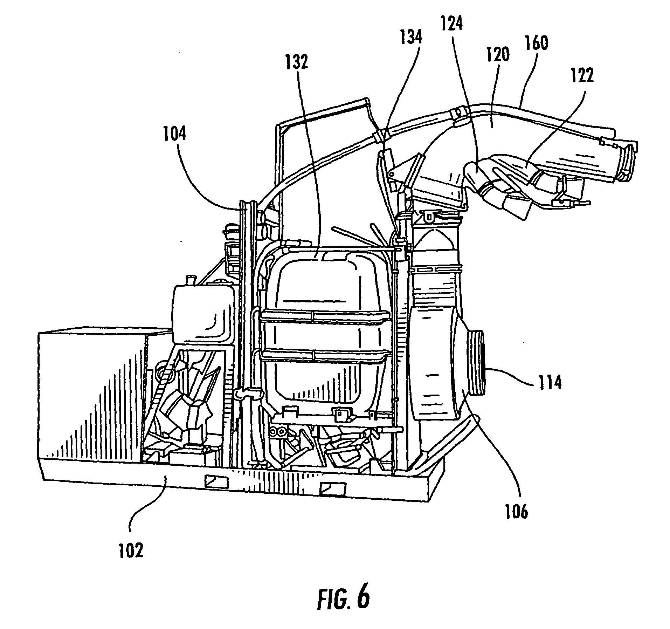

Referring now to FIGS. 5 and 6, another embodiment of a dust and/or odor suppressor device is shown. The dust suppression device, generally designated by the number 100, is shown as having a base 102 and a frame 104 for supporting a fan propelled mister 106. It is appreciated that the device may also comprise a control panel to allow for the localized operation and control of the device, a compressor and/or a dosing pump.
The fan propelled mister 106 includes a fan 110 having a hub and a plurality of blades within a housing 112. A grate or mesh 114 preferably covers the back of the housing 112 and the fan to permit air, but not large foreign objects, to be drawn into the fan during use. The housing 112 of the fan includes one or more discharge tubes 120, 122, 124 to permit the generation of a high-velocity airflow through the fan propelled mister 106. While a fan-propelled mister is preferred, it is appreciated that the mister may work with any of the known means for creating a high-velocity airflow such as, but not limited to, an air compressor.

In one embodiment, the housing comprises a main discharge tube 120 and a pair of secondary discharge tubes 122, 124 extending from the main discharge tube 120. The main discharge tube preferably comprises one or more misting rings 130 having a plurality of nozzles attached or connected at or proximate its end in a known way. The nozzles may be any of the known types to permit a fine mist to be created and different nozzles may be used to generate different sized fluid (e.g., water) particles. Nozzles providing different sized fluid particles can be alternated or otherwise located about a single ring or on concentric rings, each of which may carry different sized nozzles. It is appreciated that the nozzles may be made of, among other things, brass, stainless steel or nylon. In order to control dust, the nozzles in one embodiment generate water particles wherein the majority of the water particles fall within the range of 50 to 200 microns. It is also appreciated that the device may include separate nozzles that have multiple outlets for creating mists and not depart from the scope of the present invention.

A fluid, such as but not limited to water, is preferably supplied to the misting ring 130 through the use of hose or tube that is connected to a fluid source such as a water tank or outlet 132 for distributing small fluid particles in the form of a fine mist into the airflow. In order to increase the fluid pressure, in one embodiment of the present invention, water from the hose or tube may be delivered to a booster pump to boost the water pressure. In one such embodiment, the water pressure is increased to 150psi. If potable water is not used, it is appreciated that filters may be utilized to filter the water prior to its distribution. A valve (not shown) may be connected to the water supply tube or hose or booster pump for controlling the flow of water to the misting ring. While a misting ring is shown and disclosed about the distal end of the discharge tube, it is appreciated that other structures for housing nozzles may be used and not depart from the scope of the present invention. While the embodiments shown and disclosed herein use a water source to generate water particles, it is appreciated that the device may connect to one or more other fluid sources, in addition to or in lieu of the water source, depending upon the desired use of the device to suppress dust, odor and/or other contaminants.

The secondary discharge tubes, as shown in the figures, may comprise a base member 140, a flexible tubing member 142 and an end member 144 for hosing one or more misting rings or nozzles 146. Fluid may be supplied to the misting rings or nozzles through the use of hoses 148 that are operatively connected to the fluid tank 132, secondary fluid tank or outlet. In order to adjust the angle of the secondary discharge tubes 120, 122, the flexible tubing members 142 permit the end members 144 to be moved. Each end member 144 may comprise a flange having a hole 150 or other device for permitting a tube or other restraining device 152 to attach thereto to maintain the respective secondary discharge tube 122, 124 in place relative to the discharge tube 120.

In order to permit the mist output to cover a wider or different area, the discharge tube preferably may be angled relative to the base. As shown in FIGS. 5 and 6, one system for permitting the angular movement of the discharge tube 120 is through the use of a hydraulic piston 134 attached at one end to the base 102 or frame 104 and at the other end to the discharge tube 120. In one embodiment the discharge tube 120 has an inner diameter that is larger than the outer diameter of a tube 154 extending upward from the fan housing to permit the discharge tube to move within the tube to adjust the directional output of the discharge tube. It is also appreciated that the discharge tube 120 is preferably sized to permit the rotational movement of the discharge tube 120 relative to the base 102. In operation, the dust and/or suppressor device may be set to rotate over a set range to permit the fluid output to be dispersed over a greater area. To assist in covering a greater area, the discharge tube also may adjust its directional output during the rotational movement or between passes of the discharge tube.

A fan motor (not shown) may be mounted in the housing of the hub or elsewhere for rotating the plurality of blades. Power may be supplied to the fan motor in any of the known ways including, but not limited to: through batteries; connecting an electrical cord to an electrical outlet or other power source; or, in large applications, through an engine. A switch (not shown) is preferably electrically connected to the fan motor in a known way to permit the fan propelled mister to be selectively operated.

In situations where it is desirable to saturate a particular area or region, the device may also include one or more high pressure hoses 160. The hose(s) 160 may be fixed or attached within or on the outside of the discharge tube 120, or otherwise attached to the device in a known way. The hose is preferably adjustable so that the dispensing ends of the hoses may be independently aimed to target one or more areas or regions (e.g., the area around the point of impact for a backhoe). In operation, it is appreciated that the high pressure hose(s) may be used in conjunction with the misting nozzles to create a mist to suppress dust and/or odors. The hoses are preferably directly attached to a hydrant or other outlet to provide an ample source of fluid (e.g., water) to saturate the area, but may be attached to a separate tank and pump and not depart from the scope of the present invention.

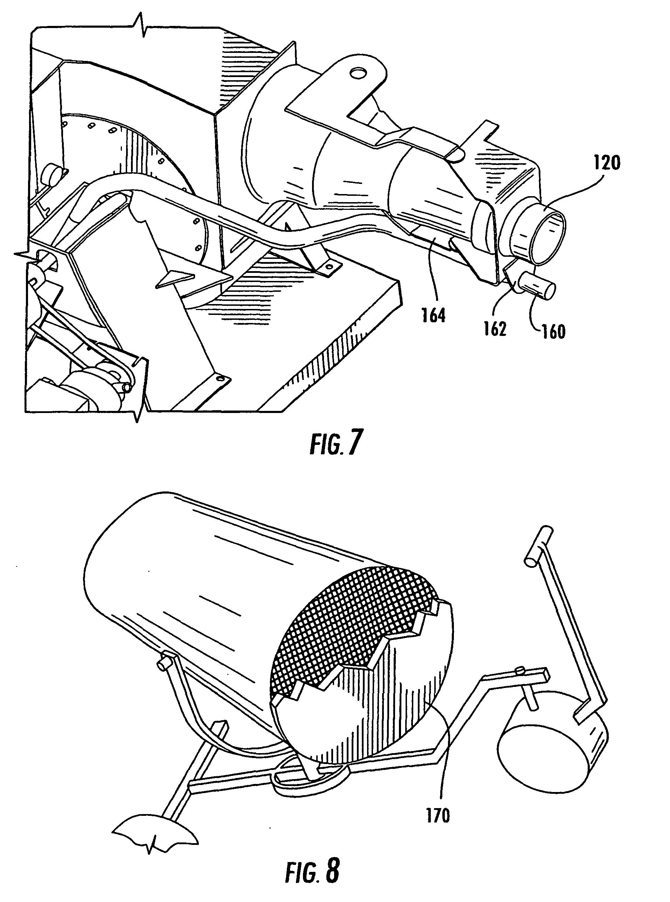

Referring now to Fig. 7, a schematic drawing of one embodiment of a high pressure hose being operatively attached to a discharge tube is shown. A mounting member 162 having a hole for receiving the high pressure hose 160 therethrough is attached to or about the discharge tube 120. In one embodiment, the mounting member and hole permit the high pressure hose to be angled slightly (e.g., 2 to 5 degrees) towards the centerline of the airflow exiting the discharge tube, allowing the airflow to propel or carry the water or other fluid from the high pressure hose over a greater distance. A guard 164, which may be fitted about or attached to the discharge tube 120, may be used to prevent the high pressure hose 160 from rubbing against the discharge tube 120 during use.

In one embodiment, the present invention permits the discharge tube to rotate 70 degrees in the vertical direction. In order to limit the amount of buckling or bowing of the high pressure hose during the vertical rotation of the discharge tube, it is appreciated that the high pressure hose may be located so that it passes through or near the center of vertical rotation for the discharge tube.

In order to cleanse the air used in the present invention, a filter is used in connection with the airflow through the fan. Referring now to Fig. 8, a schematic drawing showing use of a filter on the intake side of the fan of a discharge tube is shown. The filter may be any of the known types of air filters, such as but not limited to hydrostatic or electrostatic filters. In that way, dust is removed from the air in two ways: (1) on the inlet side by way of either a dry, metal electrostatic type filter which removes dust by way of an electrical charge or a passive filter media that physically does not let dust over a particular size pass through the filter so as to strain the dust from the air before it passes through the device; or, (2) removing dust from the air, on the discharge side, as an amalgamation of dust and water as a result of the mist created. It is appreciated that while the filter is shown with a portable device, it may be used with any dust and/or odor suppressor device of the present invention.

In another embodiment, it is appreciated that a nozzle may be attached or connected to a high pressure device such as a power washer for providing mist control at extended distances. The nozzle may be placed on top of or otherwise attached to a pedestal to provide stability for the device during operation. It is appreciated that the pedestal may be filled with water or other liquids, or may be solid. In the case of a liquid-filled pedestal, the pedestal preferably has an entry port near the top to permit the water or other liquid to be placed in the pedestal prior to use, and a drain port near the bottom of the pedestal to permit the liquid to be drained to facilitate movement and storage of the device.

It will be understood that modifications and variations may be effected without departing from the scope of the novel concepts of the present invention, but it is understood that this application is limited only by the scope of the appended claims.

## Claims

1. A dust and odor suppression device (10; 100) comprising:
a base (12; 102);
a fluid source (72; 132); and
a fan propelled mister (16; 106) attached to the base, the fan propelled mister comprising:
a fan (30; 110) for drawing air into the fan propelled mister;
a discharge tube (40; 120, 122, 124) for creating a high velocity airflow, the discharge tube having a distal end; and
a plurality of nozzles (44; 146) operatively connected to the fluid source and located proximate the distal end of the discharge tube for creating at least two sizes of small fluid particles;
**characterized in that** the fan propelled mister comprises a filter for cleansing the air drawn into the fan.

2. The device (10; 100) of claim 1 which further comprises a pressure booster (50) operatively connected between the fluid source (72; 132) and the nozzles (44; 146) to increase the fluid pressure.

3. The device (10; 100) of any one of the preceding claims which further comprises adjusting means (14, 60, 61, 64, 66, 68, 72, 74; 134) to adjust the angle of the discharge tube (40; 120, 122, 124).

4. The device (10; 100) of any one of the preceding claims which further comprises a second set of nozzles (70) operatively connected to a deodorant reservoir and located proximate the distal end of the discharge tube (40; 120, 122, 124) for creating a deodorant mist.

5. The device (10; 100) of claim 3 wherein the discharge tube (40; 120, 122, 124) comprises a center of vertical rotation, and which further comprises a high pressure hose (160) operatively connected to the fluid source, wherein the high pressure hose has a nozzle that passes through or near the center of vertical rotation of the discharge tube.

6. The device (10; 100) of claim 1 which further comprises:
a second oscillating fan propelled mister attached to the frame, the second oscillating fan propelled mister comprising:
a second fan for drawing air into the second oscillating fan propelled mister;
a second discharge tube for creating a high velocity airflow, the second discharge tube having a distal end; and
a plurality of nozzles operatively connected to the fluid source and located proximate the distal end of the second discharge tube for creating small fluid particles in the form of a mist for suppressing dust,
wherein the mists from the first oscillating fan propelled mister (16) and the second oscillating fan propelled mister will overlap during their oscillating motions.

7. The device of claim 1 or 6 wherein the dust and odor suppression device (10; 100) is portable.

8. A device (10; 100) as claimed in any one of the preceding claims comprising at least one high pressure hose (160) operatively connected to the at least one fluid source (72; 132).

9. The device of claim 8 wherein the at least one high pressure hose (160) is adjustably positioned relative to the discharge tube (40; 120, 122, 124).

10. The device (10; 100) of claim 8 or 9 which further comprises a mounting (162) attached to or about the discharge tube (40; 120, 122, 124) for mounting the high pressure hose (160).

11. The device (10; 100) of claim 10 which further comprises a guard (164) that may be fitted about or attached to the discharge tube (40; 120, 122, 124) to prevent the high pressure hose (160) from rubbing against the discharge tube during use.

12. The device (10; 100) as claimed in any one of the preceding claims wherein a first size of fluid particle is for suppressing order and a second size of fluid particle is for suppressing dust.

13. A device (10; 100) as claimed in any one of the preceding claims wherein the fluid source (72; 132) is a water source.

14. A device (10; 100) as claimed in any one of the preceding claims wherein the fan propelled mister (16; 116) oscillates.

15. A device (10; 100) as claimed in any one of the preceding claims which further comprises a frame (14; 104) extending upward from the base (12; 102), and wherein the fan propelled mister (16; 106) is attached to the frame.

## Patentansprüche

1. Staub- und Geruchsunterbindungsvorrichtung (10, 100) umfassend:
eine Basis (12, 102),
eine Fluidquelle (72, 132), und
einen an der Basis angebrachten, lüfterbetriebenen Vernebler (16, 106), wobei der lüfterbetriebene Vernebler umfasst:
einen Lüfter (30, 130) zum Einsaugen von Luft in den lüfterbetriebenen Vernebler,
eine Ausstossröhre (40, 120, 122, 124) zum Erzeugen eines Hochgeschwindigkeitsluftflusses, wobei die Ausstossröhre ein Außenende aufweist, und
eine Vielzahl von Düsen (44, 146), die betriebsmäßig mit der Fluidquelle verbunden und nahe dem Außenende der Ausstossröhre gelegen sind, um zumindest zwei Größen kleiner Fluidpartikel zu erzeugen,
**dadurch gekennzeichnet, dass** der lüfterbetriebene Vernebler einen Filter zum Reinigen der in den Lüfter eingesaugten Luft umfasst.

2. Vorrichtung (10, 100) gemäß Anspruch 1, die weiter einen Druckverstärker (50) umfasst, der betriebsmäßig zwischen der Fluidquelle (72, 132) und den Düsen (44, 146) verbunden ist, um den Fluiddruck zu erhöhen.

3. Vorrichtung (10, 100) gemäß einem der vorangegangenen Ansprüche, die weiter Justiermittel (14, 60, 61, 64, 66, 68, 72, 74, 134) umfasst, um den Winkel der Ausstossröhre (40, 120, 122, 124) zu justieren.

4. Vorrichtung (10, 100) gemäß einem der vorangegangenen Ansprüche, die weiter einen zweiten Satz Düsen (70) umfasst, der betriebsmäßig mit einem Geruchsspeicher verbunden und nahe dem Außenende der Ausstossröhre (40, 120, 122, 124) gelegen ist, um einen Geruchsnebel zu erzeugen.

5. Vorrichtung (10, 100) von Anspruch 3, bei der die Ausstossröhre (40, 120, 122, 124) eine Vertikaldrehungs-Mitte umfasst, und die weiter einen Hochdruckschlauch (160) umfasst, der betriebsmäßig mit der Fluidquelle verbunden ist, wobei der Hochdruckschlauch eine durch oder nahe der Vertikaldrehungs-Mitte der Ausstossröhre verlaufende Düse aufweist.

6. Vorrichtung (10, 100) von Anspruch 1, weiter umfassend:
einen zweiten oszillierenden, am Rahmen angebrachten, lüfterbetriebenen Vernebler, wobei der zweite oszillierende, lüfterbetriebene Vernebler umfasst:
einen zweiten Lüfter zum Einsaugen von Luft in den zweiten oszillierende, lüfterbetriebenen Vernebler,
eine zweite Ausstossröhre zum Erzeugen eines Hochgeschwindigkeitsluftflusses, wobei die zweite Ausstossröhre ein Außenende aufweist, und
eine Vielzahl von Düsen, die betriebsmäßig mit der Fluidquelle verbunden und nahe dem Außenende der zweiten Ausstossröhre gelegen sind, um kleine Fluidpartikel in der Gestalt eines Nebels zum Unterbinden von Staub zu erzeugen,
wobei sich die Nebel vom ersten oszillierenden, lüfterbetriebenen Vernebler (16) und vom zweiten oszillierenden, lüfterbetriebenen Vernebler während ihren oszillierenden Bewegungen überlappen werden.

7. Vorrichtung von Anspruch 1 oder 6, bei der die Staubund Geruchsunterbindungsvorrichtung (10, 100) tragbar ist.

8. Vorrichtung (10, 100) gemäß einem der vorangegangenen Ansprüche, die weiter zumindest einen Hochdruckschlauch (160) umfasst, der betriebsmäßig mit der zumindest einen Fluidquelle (72, 132) verbunden ist.

9. Vorrichtung gemäß Anspruch 8, bei welcher der zumindest eine Hochdruckschlauch (160) justierbar relativ zur Ausstossröhre (40, 120, 122, 124) gelegen ist.

10. Vorrichtung (10, 100) gemäß Anspruch 8 oder 9, die weiter eine an oder um die Ausstossröhre (40, 120, 122, 124) angebrachte Befestigung (162) zum Befestigen des Hochdruckschlauchs (160) umfasst.

11. Vorrichtung (10, 100) von Anspruch 10, die weiter ein Schutzblech (164) umfasst, das um die Ausstossröhre (40, 120, 122, 124) eingepasst oder an dieser angebracht sein kann, um den Hochdruckschlauch (160) daran zu hindern, während der Verwendung gegen die Ausstossröhre zu scheuern.

12. Vorrichtung (10, 100) gemäß einem der vorangegangenen Ansprüche, bei der eine erste Fluidpartikelgröße zum Unterbinden eines Geruches vorhanden ist, und bei der eine zweite Fluidpartikelgröße zum Unterbinden von Staub vorhanden ist.

13. Vorrichtung (10, 100) gemäß einem der vorangegangenen Ansprüche, bei der die Fluidquelle (72, 132) eine Wasserquelle ist.

14. Vorrichtung (10, 100) gemäß einem der vorangegangenen Ansprüche, bei welcher der lüfterbetriebene Vernebler (16, 116) oszilliert.

15. Vorrichtung (10, 100) gemäß einem der vorangegangenen Ansprüche, die weiter einen sich von der Basis (12, 102) nach oben erstreckenden Rahmen (14, 104) umfasst, und bei welcher der lüfterbetriebene Vernebler (16, 106) am Rahmen angebracht ist.

## Revendications

1. Appareil de suppression de poussière et d'odeurs (10 ; 100) comprenant :
une base (12 ; 102) ;
une source de fluide (72 ; 132) ; et
un brumisateur à propulsion par ventilateur (16 ; 106) fixé à la base, le brumisateur à propulsion par ventilateur comprenant :
un ventilateur (30 ; 110) pour envoyer de l'air dans le brumisateur à propulsion par ventilateur ;
un tube d'évacuation (40 ; 120, 122, 124) pour créer un courant d'air à grande vitesse, le tube d'évacuation ayant une extrémité distale ; et
une pluralité de gicleurs (44 ; 146) connectés de manière opérationnelle à la source de fluide et situés à proximité de l'extrémité distale du tube d'évacuation pour créer au moins deux tailles de petites particules fluides ;
**caractérisé en ce que** le brumisateur à propulsion par ventilateur comprend un filtre pour nettoyer l'air envoyé dans le ventilateur.

2. Appareil (10 ; 100) selon la revendication 1, qui comprend en outre un amplificateur de pression (50) connecté de manière opérationnelle entre la source de fluide (72 ; 132) et les gicleurs (44 ; 146) pour augmenter la pression de fluide.

3. Appareil (10 ; 100) selon l'une quelconque des revendications précédentes, qui comprend en outre des moyens de réglage (14, 60, 61, 64, 66 68, 72, 74 ; 134) pour régler l'angle du tube d'évacuation (40 ; 120, 122, 124).

4. Appareil (10 ; 100) selon l'une quelconque des revendications précédentes, qui comprend en outre un deuxième ensemble de gicleurs (70) connectés de manière opérationnelle à un réservoir de désodorisant et situés à proximité de l'extrémité distale du tube d'évacuation (40 ; 120, 122, 124) pour créer une brume désodorisante.

5. Appareil (10 ; 100) selon la revendication 3, dans lequel le tube d'évacuation (40 ; 120, 122, 124) comprend un centre de rotation verticale, et qui comprend en outre un flexible à haute pression (160) connecté de manière opérationnelle à la source de
dans lequel le flexible à haute pression a un gicleur qui passe à travers ou près du centre de rotation verticale du tube d'évacuation.

6. Appareil (10 ; 100) selon la revendication 1, qui comprend en outre :
un deuxième brumisateur à propulsion par ventilateur oscillant fixé au cadre, le deuxième brumisateur à propulsion par ventilateur oscillant comprenant :
un deuxième ventilateur pour envoyer de l'air dans le deuxième brumisateur à propulsion par ventilateur oscillant ;
un deuxième tube d'évacuation pour créer un courant d'air à grande vitesse, le deuxième tube d'évacuation ayant une extrémité distale ; et
une pluralité de gicleurs connectés de manière opérationnelle à la source de fluide et
situés à proximité de l'extrémité distale du deuxième tube d'évacuation pour créer de petites particules de fluide sous la forme d'une brume pour enlever la poussière,
dans lequel les brumes du premier brumisateur à propulsion par ventilateur oscillant (16) et du deuxième brumisateur à propulsion par ventilateur oscillant se recouvrent au cours de leurs mouvements oscillants.

7. Appareil (10 ; 100) selon la revendication 1 ou 6, dans lequel l'appareil de suppression de poussière et d'odeurs (10 ; 100) est portable.

8. Appareil (10 ; 100) selon l'une quelconque des revendications précédentes, comprenant au moins un flexible à haute pression (160) connecté de manière opérationnelle à l'au moins une source de fluide (72 ; 132).

9. Appareil (10 ; 100) selon la revendication 8, dans lequel au moins un flexible à haute pression (160) est positionné de manière réglable par rapport au tube d'évacuation (40 ; 120, 122, 124).

10. Appareil (10 ; 100) selon la revendication 8 ou 9, qui comprend en outre une monture (162) fixée au ou autour du tube d'évacuation (40 ; 120, 122, 124) pour monter le flexible à haute pression (160).

11. Appareil (10; 100) selon la revendication 10, qui comprend en outre une protection (164) qui peut être montée autour du ou fixée au tube d'évacuation (40 ; 120, 122, 124) pour empêcher que le flexible à haute pression (160) frotte contre le tube d'évacuation pendant son utilisation.

12. Appareil (10 ; 100) selon l'une quelconque des revendications précédentes, dans lequel une première taille de particule de fluide est pour enlever les odeurs et une deuxième taille de particule de fluide est pour enlever la poussière.

13. Appareil (10 ; 100) selon l'une quelconque des revendications précédentes, dans lequel la source de fluide (72 ; 132) est une source d'eau.

14. Appareil (10 ; 100) selon l'une quelconque des revendications précédentes, dans lequel le brumisateur à propulsion par ventilateur (16 ; 116) oscille.

15. Appareil (10 ; 100) selon l'une quelconque des revendications précédentes, qui comprend en outre un cadre (14 ; 104) s'étendant vers le haut à partir de la base (12 ; 102), et dans lequel le brumisateur à propulsion par ventilateur (16 ; 106) est fixé au cadre.
